# EUROPÄISCHE PATENTSCHRIFT

(11) **EP 1 613 829 B1**
(45) Veröffentlichungstag und Bekanntmachung des Hinweises auf die Patenterteilung: **25.03.2009**
(21) Anmeldenummer: 03782346.5
(22) Anmeldetag: 09.12.2003
(51) Int. Cl.: E05F 15/18, H02K 41/03

(54) **SCHIEBETÜR**
SLIDING DOOR
PORTE COULISSANTE

(30) Priorität: 09.12.2002 DE 10257583
(43) Veröffentlichungstag der Anmeldung: 11.01.2006
(73) Patentinhaber: DORMA GmbH + Co. KG, 58256 Ennepetal (DE)
(72) Erfinder: FINKE, Andreas, 58285 Gevelsberg (DE); GINZEL, Lothar, 58239 Schwerte (DE)
(86) Internationale Anmeldenummer: PCT/EP2003/013949
(87) Internationale Veröffentlichungsnummer: WO 2004/053270

(56) Entgegenhaltungen:
- EP-A- 0 241 063
- EP-A- 0 433 830
- US-A- 5 712 516
- PATENT ABSTRACTS OF JAPAN vol. 2000, no. 26, 1. Juli 2002 (2002-07-01) -& JP 2001 262936 A (MATSUSHITA ELECTRIC WORKS LTD), 26. September 2001 (2001-09-26)

## Beschreibung

Die Erfindung betrifft eine Schiebetür oder dergleichen mit einem Antrieb und einem die Schiebetür tragenden Tragsystem.

In der EP 0 671 071 B1 wird ein Linearantrieb für eine Schiebetür beschrieben. Bei diesem Antrieb befindet sich ein stationärer Langstator oberhalb des beweglichen Flügels. Die einzelnen Spulen sind dabei über die Gesamtlänge des Stators verteilt und zwar in gleichmäßigem Abstand, wobei das Joch des Stators aus Stäben besteht, die quer zu einem längs angeordneten Jochteil gehören. Die zu dem Flügel weisende Seite der quer angeordneten Jochsegmente wird durch eine ferromagnetische Platte mit darauf angeordneten Distanzstreifen angeschlossen. Innerhalb des beweglichen Flügels befinden sich Dauermagnete. Wird der bewegliche Flügel mit der vorbeschriebenen Platte in Verbindung gebracht, so hängt der Flügel aufgrund der magnetischen Kraft der Dauermagnete an dem Stator. Dadurch, dass am Ende und am Anfang des verschiebbaren Flügels Distanzrollen vorhanden sind, befindet sich zwischen den Dauermagneten und den Abstandsleisten bzw. der Platte ein definierter Luftspalt. Die Rollen haben die Aufgabe, die Schiebebewegung des Flügels ausführen zu können. Gleichzeitig sind sie für eine konstante Beabstandung der Dauermagnete zu dem Stator notwendig. Bei einer Bestromung der Spulen wird das dadurch erzeugte Magnetfeld innerhalb des Stators weitergeschaltet, so dass eine Fortbewegung des angehängten Flügels möglich ist.

Es ist daher Aufgabe der vorliegenden Erfindung, eine Schiebetür oder dergleichen zu schaffen, die insgesamt kostengünstiger herzustellen ist und die darüber hinaus weniger Unterhaltskosten erfordert.

Diese Aufgabe wird durch die im Patentanspruch 1 angegebenen Merkmale gelöst. Vorteilhafte Weiterbildungen ergeben sich aus den Unteransprüchen.

Dadurch, dass der Antrieb als Linearantrieb ausgebildet ist und dass das Tragsystem für die Schiebetür in den Linearantrieb integriert ist, ist das Antriebssystem mit dem Tragsystem kombiniert worden.

Erfindungsgemäß weist der Linearantrieb eine Vielzahl von Magneten auf, die sowohl zum Tragen der Schiebetür als auch zum Verfahren der Schiebetür dienen. Somit ist es auf einfache Art und Weise möglich, die Magnete des Linearantriebes gleichzeitig als Tragsystem zu verwenden.

Die Magnete sind über ein oder mehrere Halteelemente an der Schiebetür befestigt. Dies ermöglicht eine einfache Befestigung der Magnete an der Schiebetür und trägt außerdem dazu bei, dass verschiedene Formen von Schiebetüren mit dem erfindungsgemäßen Linearantrieb verbunden werden können.

Damit das Halteelement schnell und einfach mit der Schiebetür verbunden werden kann, ist erfindungsgemäß vorgesehen, dass die Halteelemente in eine mit der Schiebetür verbindbare Tragschiene einsetzbar, insbesondere einschiebbar oder verschraubbar sind.

Besonders einfach gestaltet sich die Anbringung der Halteelemente an der Tragschiene, wenn nach einer vorteilhaften Weiterbildung die Tragschiene zur Aufnahme des Halteelementes auf ihrer Oberseite mit einer C-förmigen Nut versehen ist. In eine solche Nut können die Halteelemente, z. B. von der Stirnseite her, leicht und schnell in die Tragschiene eingeschoben werden.

Damit das Halteelement in einfacher Weise an unterschiedliche Schiebetürlängen angepasst werden kann, besteht das Halteelement aus einer Vielzahl von einzelnen Haltern. Infolge dieser Ausgestaltung ist eine flexible Anpassung des Halteelementes an beliebige Schiebetürlängen möglich.

Jeder Halter besteht vorzugsweise aus einem in die C-förmige Nut einsetzbaren Sockel und einer Aufnahme für die Magnete. Durch diese Formgebung ist einerseits gewährleistet, dass ein einfaches Einführen der Halter in die Tragschiene möglich ist und zum anderen sicherstellt, dass die Magnete lagegenau an dem Halter festgelegt werden können.

Gemäß einer vorteilhaften Ausgestaltung ist der Sockel länger und breiter als die Aufnahme. Hierdurch wird erreicht, dass einerseits eine gute Führung der Halter in der Nut gewährleistet ist und dass andererseits bei mehreren in die Nut eingeführten Haltern ein Abstand zwischen den Aufnahmen besteht, der von den Magneten ausgefüllt und überbrückt wird.

Um die Halter sicher und lagegenau in der Tragschiene und untereinander zu halten, ist jeder Sockel an seinen beiden Enden mit komplementären Verbindungselementen versehen. Diese Verbindungselemente, die z. B. aus einer teilkreisförmigen Rastaufnahme an dem einen Ende und einem als Teilkreisring ausgebildeten Rastvorsprung an dem anderen Ende bestehen können, sind elastisch verformbar und können somit in horizontaler Richtung leicht ineinander geschoben werden. Um das Einführen der Verbindungselemente zu erleichtern, kann an der teilkreisförmigen Rastaufnahme eine zusätzliche Einführungsrampe vorgesehen sein.

Damit die Magnete sicher in der Aufnahme gehalten werden können, sind vorzugsweise in der Aufnahme Taschen für die Magnete angeordnet.

Die Taschen weisen vorzugsweise in Richtung der Verbindungselemente, so dass beim Zusammenbau des Halteelementes die Magnete leicht und schnell zwischen zwei aufeinanderfolgende Halter eingesetzt werden können. Diese Taschen sind vorzugsweise allseitig geschlossen, so dass eine sichere und lagegenaue Anordnung der Magnete gewährleistet ist.

Nach einer alternativen Ausführungsform können die Taschen auch nach oben offen sein. Dies vereinfacht das Einsetzen der Magnete in die Halter, sofern die Magnete von oben in die Taschen eingesetzt werden sollen. In einem solchen Falle werden die Halter vorher in die Tragschiene geschoben.

Auf den Außenseiten der Aufnahme sind vorzugsweise vertikal verlaufende Leisten zur Führung in einer beidseitig verlaufenden Führungsschiene vorgesehen. Dies ermöglicht eine exakte und im Wesentlichen spielfreie Führung der Schiebetür in der Führungsschiene. Die Führungsschiene ist aus einem ferromagnetischen Material und stellt mit in ihr befestigten Spulen den stationären Stator des Linearantriebes dar.

Die Anordnung ist dabei so getroffen, dass gemäß einer vorteilhaften Weiterbildung der Spalt zwischen den Leisten und der Führungsschiene möglichst klein ist und vorzugsweise etwa 0,1 mm beträgt. Durch die Führungsschienen und den geringen Luftspalt zu dem Halteelement wird der anhängende Schiebeflügel schwebend montiert.

Nach einer alternativen Ausführungsform kann der Halter in der Draufsicht auch H-förmig ausgebildet sein. Diese Ausgestaltung ist gerade dann vorteilhaft, wenn die Taschen nach oben offen sind, weil dadurch ein leichtes Einschieben der Magnete von oben möglich ist.

Damit die erfindungsgemäße Schiebetür in ihrer Höhe variabel und exakt an die baulichen Gegebenheiten angepasst werden kann, sind nach einer vorteilhaften Weiterbildung die Halter über Abstandsleisten mit der Schiebetür verbunden.

Nach einer alternativen Ausführungsform können pro Halter auch mehrere nach oben offene Einschübe zur Aufnahme der Magnete vorgesehen sein. Diese Einschübe können die Magnete allseitig umschließen, so dass die Magnete vollständig in den Einschüben der Aufnahme aufgenommen sind.

Damit die Magnete nicht aus den nach oben offenen Taschen und/oder den Einschüben herausfallen können und damit die Magnete genau positioniert werden können, sind die Taschen bzw. die Einschübe nach einer vorteilhaften Weiterbildung mit einem Deckel verschließbar, der vorzugsweise mehrere Taschen oder Einschübe überdeckt. Dies vereinfacht die Anbringung der Deckel erheblich.

Weitere Merkmale und Vorteile der Erfindung ergeben sich aus der nachfolgenden Beschreibung bevorzugter Ausführungsbeispiele.

Es zeigen:
- Figur 1:: eine Gesamtansicht eines erfindungsgemäßen Linearantriebes,
- Figur 2:: ein in Verbindung mit dem erfindungsgemäßen Linearantrieb verwendeter Führungsschlitten zur Aufhängung einer Schiebetür,
- Figur 3:: ein bei dem erfindungsgemäßen Führungsschlitten verwendeter Halter in einer perspektivischen Ansicht,
- Figur 4 bis 6:: verschiedene Ansichten des Halters nach Figur 4,
- Figur 7:: eine Ausführungsvariante des Halters,
- Figur 8:: eine weitere Ausführungsvariante des Halters,
- Figur 9:: eine Ansicht des Führungsschlittens nach Figur 3 von oben,
- Figur 10:: die Halter gemäß Figur 3 in Verbindung mit einer Schiebetür,
- Figur 11:: die Halter nach Figur 4 mit einer zusätzlichen Höheneinstellung,
- Figur 12:: eine Ausführungsvariante des Halters in Verbindung mit einer Schiebetür,
- Figur 13:: eine weitere Ausführungsvariante des Halters in Verbindung mit einer Schiebetür,
- Figur 14:: eine in Verbindung mit dem erfindungsgemäßen Linearantrieb verwendete Tragschiene,
- Figur 15 bis 17:: eine erste Ausführungsform einer Justiereinrichtung für eine Schiebetür,
- Figur 18:: eine in Verbindung mit dem erfindungsgemäßen Linearantrieb verwendete Tragschiene nach einer anderen Ausführungsform,
- Figur 19 bis 21:: eine zweite Ausführungsform einer Justiereinrichtung für die Schiebetür,
- Figur 22:: eine Ausführungsform der in dem erfindungsgemäßen Linearantrieb verwendeten Spulen,
- Figur 23:: eine Ansicht des erfindungsgemäßen Linearantriebes von unten und
- Figur 24:: ein Detail einer in Verbindung mit dem erfindungsgemäßen Linearantrieb verwendeten Schiebetürstabilisierung.

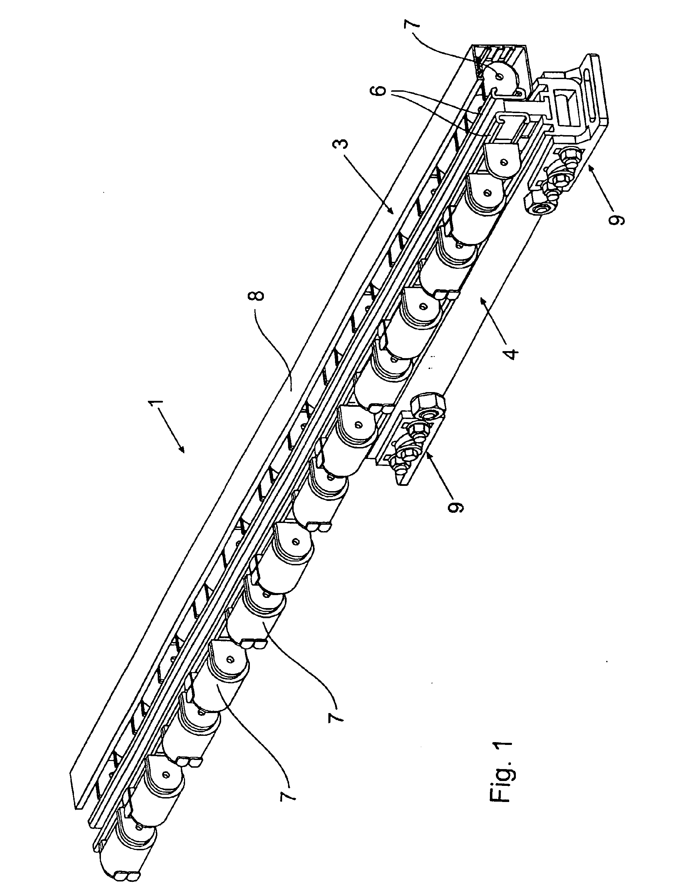

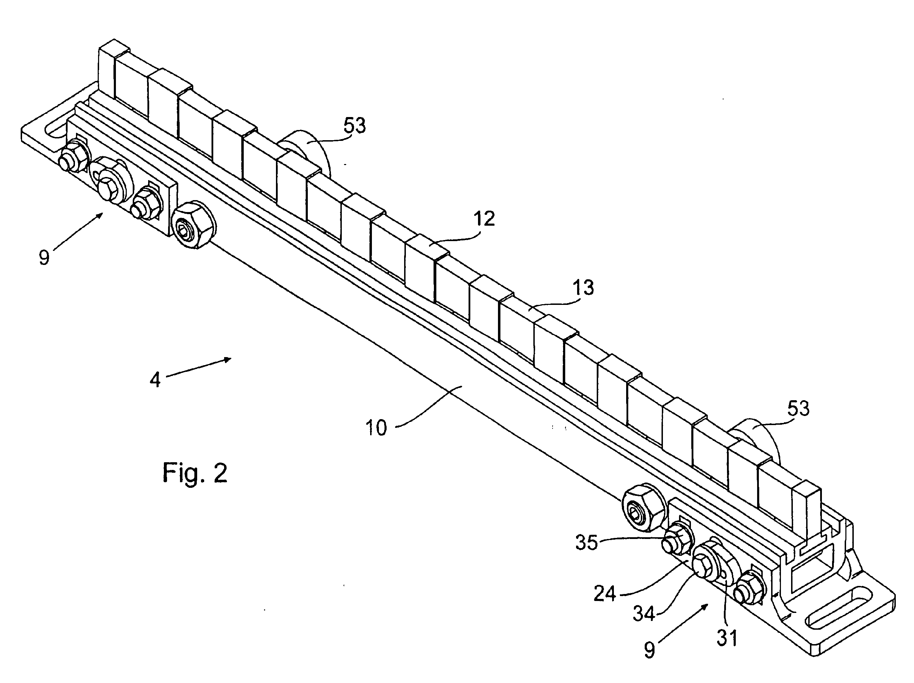

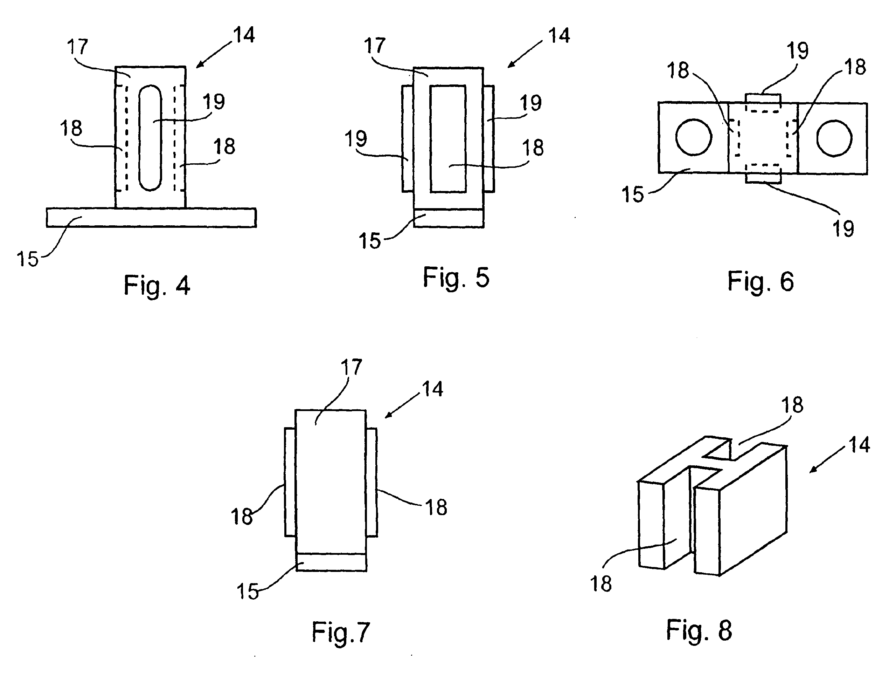

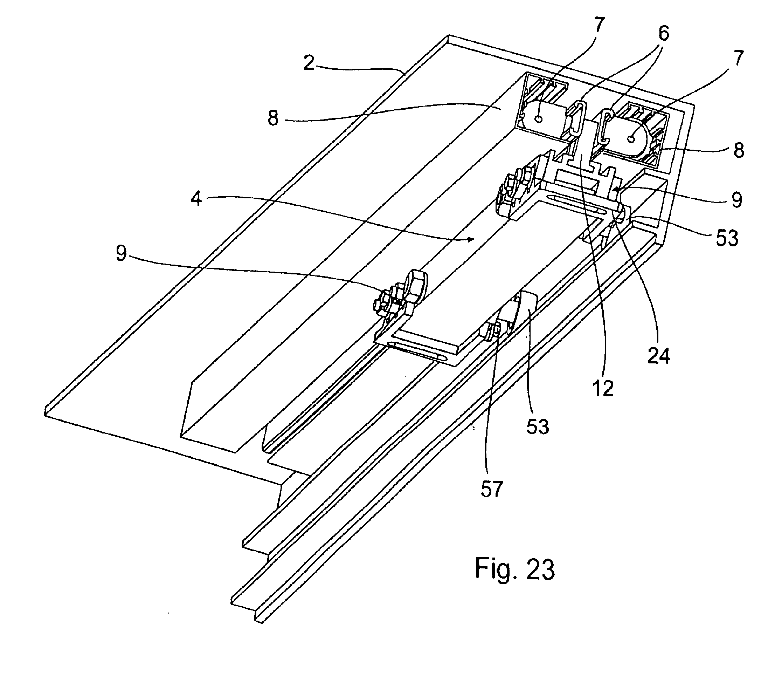

In Figur 1 ist eine Gesamtansicht eines erfindungsgemäßen Linearantriebes 1 dargestellt. Der Linearantrieb 1 ist in einer Halterung 2 (siehe Figur 23) untergebracht, welche an einem (nicht dargestellten) Gebäudeteil befestigt werden kann. Der Linearantrieb 1 selbst besteht aus einer in der Halterung 2 gelagerten stationären Führungsschiene 3 und einem in der Führungsschiene 3 verfahrbaren Führungsschlitten 4. An dem Führungsschlitten 4 ist eine in Längsrichtung der Führungsschiene 3 verfahrbare Schiebetür 5 (siehe Figur 4) gelagert. Der Führungsschlitten 4 ist in Figur 2 im Detail dargestellt.

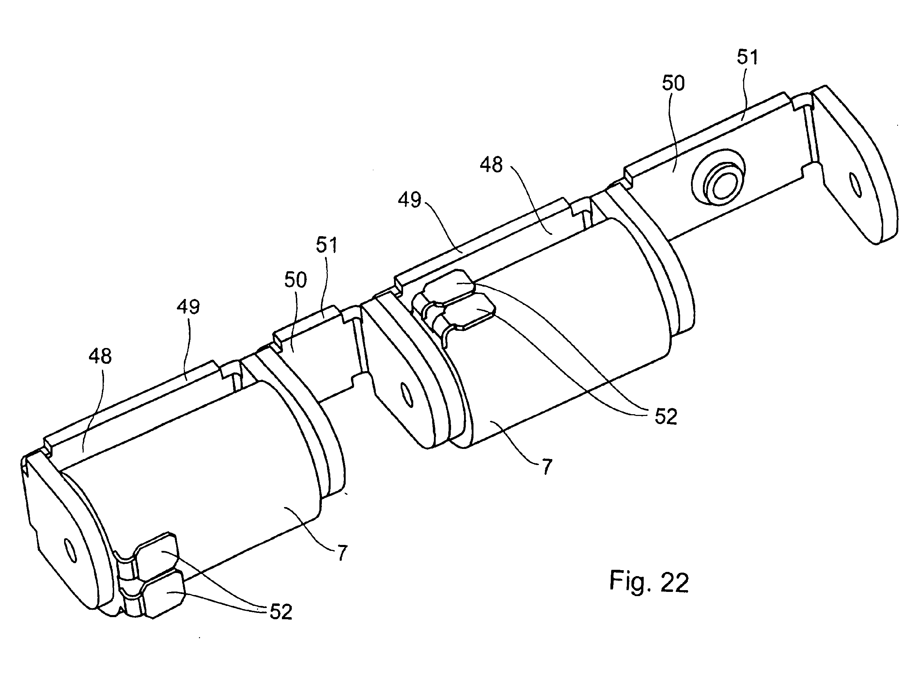

Die Führungsschiene 3 weist zwei C-förmige Gleitschienen 6 auf, die voneinander beabstandet sind und deren offene Seiten voneinander wegweisen. Zwischen den Gleitschienen 6 befindet sich ein Teil des Führungsschlittens 4. In den voneinander wegweisenden offenen Seiten der C-förmigen Gleitschienen 6 sind Spulen 7 angeordnet, welche von den Stirnseiten der Gleitschienen 6 her in diese eingeschoben werden können. Die Spulen 7, die in Figur 22 im Detail dargestellt sind, sind mit einer Kontaktschiene 8 verbunden. An dem Führungsschlitten 4 ist weiterhin eine Justiereinrichtung 9 vorgesehen, mit deren Hilfe die mit dem Führungsschlitten 4 verbundene Schiebetür 5 ausgerichtet werden kann.

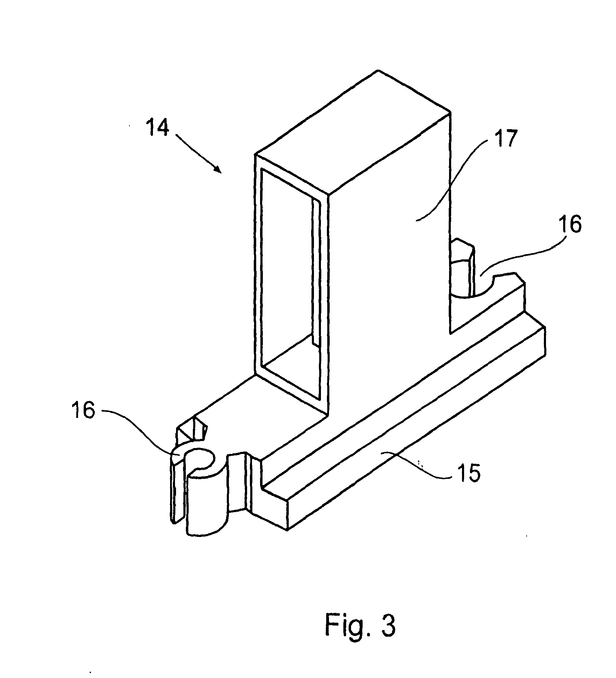

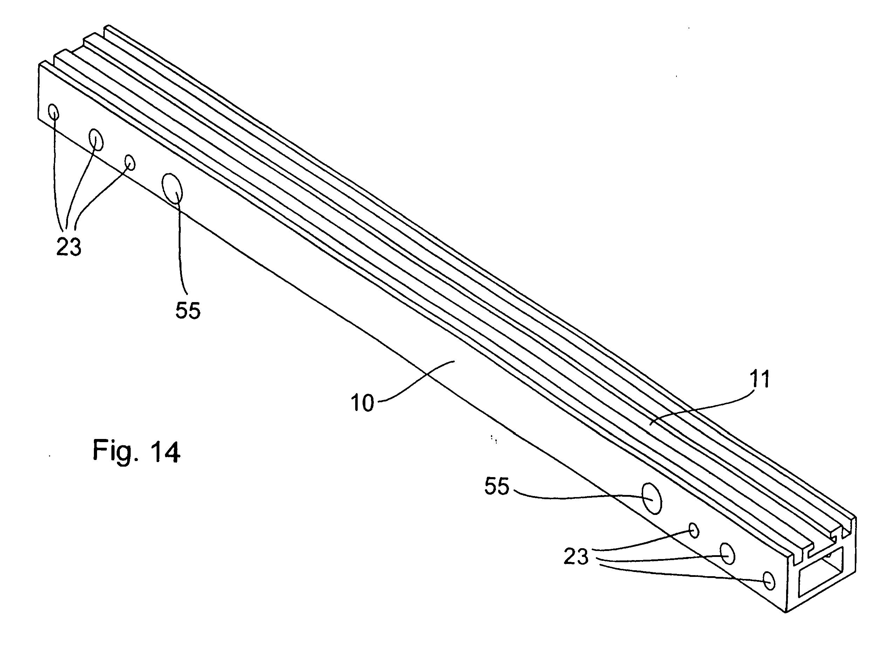

In Figur 2 ist der Führungsschlitten 4 im Detail dargestellt. Der Führungsschlitten 4 weist eine Tragschiene 10 auf, die als Hohlkastenprofil ausgebildet ist. Auf einer Oberseite des Hohlkastenprofiles ist eine mittig in Längsrichtung der Tragschiene 10 verlaufende und nach oben offene C-förmige Nut 11 (siehe Figur 14) ausgebildet. In diese Nut 11 ist ein Halteelement 12 einsetzbar, das von der Stirnseite her in die Tragschiene 10 eingeschoben werden kann. In diesem Halteelement 12 sind Magnete 13 aufgenommen, welche zusammen mit den an den C-förmigen Gleitschienen 6 gelagerten Spulen 7 eine Halterung und einen Antrieb für die Schiebetür 5 bilden. Der Aufbau des Halteelementes 12 wird im Zusammenhang mit den Figuren 3 bis 8 noch näher erläutert.

Weiterhin ist jeweils an den Enden der Tragschiene 10 die bereits erwähnte Justiereinrichtung 9 vorgesehen, mit deren Hilfe die Schiebetür 5 bezüglich der Tragschiene 10 ausgerichtet werden kann. Diese Justiereinrichtung 9 wird später im Zusammenhang mit den Figuren 14 bis 17 noch genauer beschrieben werden.

Das in der nach oben offenen Nut 11 der Tragschiene 10 vorgesehene Halteelement 12 besteht aus einer Vielzahl von einzelnen Haltern 14. Ein solcher einzelner Halter 14 ist in Figur 3 dargestellt. Der Halter 14 weist einen Sockel 15 auf, der in die C-förmige Nut 11 an der Tragschiene 10 eingeschoben werden kann. Der Sockel 15 ist an seinem vorderen und an seinem hinteren Ende mit je einem Verbindungselement 16 versehen, welches eine Verbindung mehrerer einzelner Halter 14 untereinander ermöglicht, um so das Halteelement 12 zu bilden. Im gezeigten Ausführungsbeispiel bestehen die komplementär ausgebildeten Verbindungselemente 16 aus einer teilkreisförmigen Rastaufnahme an dem einen Ende und einem als Teilkreisring ausgebildeten Rastvorsprung an dem anderen Ende. Der Rastvorsprung ist so in die Rastaufnahme eingesetzt, dass die einzelnen Halter 14 in der Ebene des Sockels 15 gegeneinander verschwenkbar sind, um Toleranzen ausgleichen zu können. Die Verbindungselemente 16 können entweder in vertikaler Richtung ineinander gesteckt oder in horizontaler Richtung ineinander geschoben werden. Um ein Ineinanderschieben in horizontaler Richtung zu ermöglichen, sind die Verbindungselemente 16 elastisch ausgebildet, so dass der Teilkreisring durch eine entsprechende keilförmig ausgebildete Einführungsrampe an der teilkreisförmigen Rastaufnahme zusammengedrückt wird und dann in die Rastaufnahme hineingleiten kann.

Von dem Sockel 15 erstreckt sich eine Aufnahme 17 nach oben, die zur Lagerung der Magnete 13 dient. Die Aufnahme 17 ist kürzer als der Sockel 15, so dass sich bei mehreren zusammengefügten Haltern 14 zwischen den einzelnen Aufnahmen 17 ein Abstand ergibt. Jede Aufnahme 17 weist weiterhin zwei nutförmige Taschen 18 auf, die auf entgegengesetzten Seiten der Aufnahme 17 angeordnet sind. In diese nutförmigen Taschen 18 können die Magnete 13 so eingesteckt werden, dass sie den zwischen zwei Aufnahmen 17 vorhandenen Abstand überbrücken, wie die Figur 2 zeigt. Auf den Außenseiten der Aufnahmen 17 sind vertikal verlaufende Leisten 19 vorgesehen, die zur Führung der Halter 14 an den Innenseiten der Gleitschienen 6 dienen. Diese Leisten 19 weisen entweder einen geringen Luftspalt zu den Gleitschienen 6 auf, z. B. 0,1 mm, oder liegen ohne einen Luftspalt direkt an den Gleitschienen 6 an. Die Gleitschienen 6 sind dabei aus einem ferromagnetischen Material hergestellt. Die Flächen, die zu den Magneten weisen, können z. B. mit einer gleitfähigen Substanz, z. B. mit Nanopartikeln, beschichtet sein, damit bei einer Berührung der Halter 14 mit den Gleitschienen 6 keine zusätzliche Reibung entsteht.

In den Figuren 7 und 8 sind Ausführungsvarianten des Halters dargestellt. In Figur 7 ist ein Halter 14 dargestellt, der als Endstück in die Tragschiene 10 eingeschoben wird und der aus diesem Grunde nur einseitig mit einer Tasche 18 versehen ist, während die in Figur 7 gezeigte Seite eben, d. h. ohne Tasche, ausgebildet ist.

Beim Aufbau des Halteelementes 12 wird zunächst der in Figur 7 gezeigte Halter 14 als Anfangshalter in die Nut 11 der Tragschiene 10 eingeführt. Dann wird ein Magnet 13 mit seinem vorderen Ende in die Tasche 18 des ersten Halters 14 eingesetzt. Anschließend wird ein z. B. in Figur 4 gezeigter Halter 14 in die Nut 11 eingeschoben. Dabei nimmt die nach vorne weisende Tasche 18 das hintere Ende des ersten Magneten 13 auf. Nun wird wieder ein Magnet 13 mit seinem vorderen Ende in die hintere Tasche 18 des nächsten Halters 14 eingesetzt, darauf folgt ein weiterer Halter usw., bis die Tragschiene 10 vollständig mit Haltern 14 und Magneten 13 gefüllt ist. Als Abschluss wird dann wieder ein Halter 14 gemäß Figur 7 in die Tragschiene 10 eingesetzt. Die Tragschiene 12 weist nun die in Figur 2 dargestellte Ausgestaltung auf.

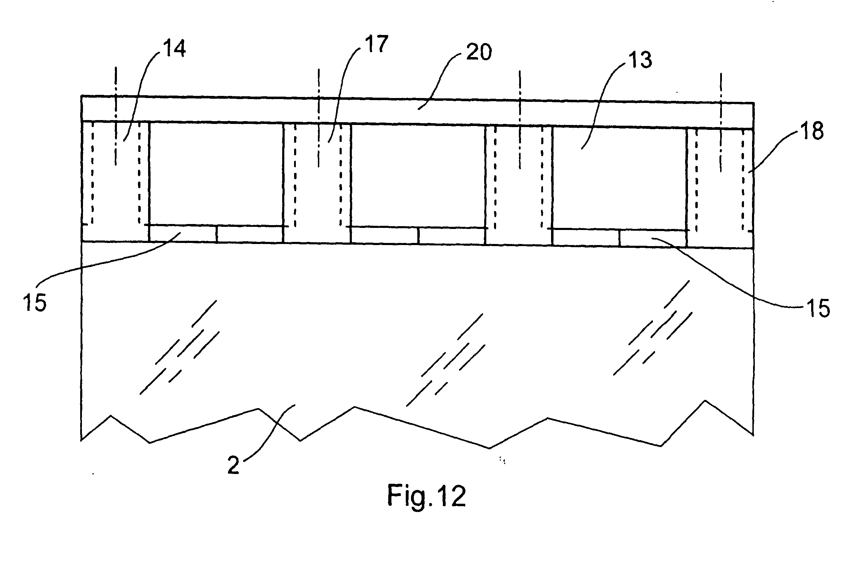

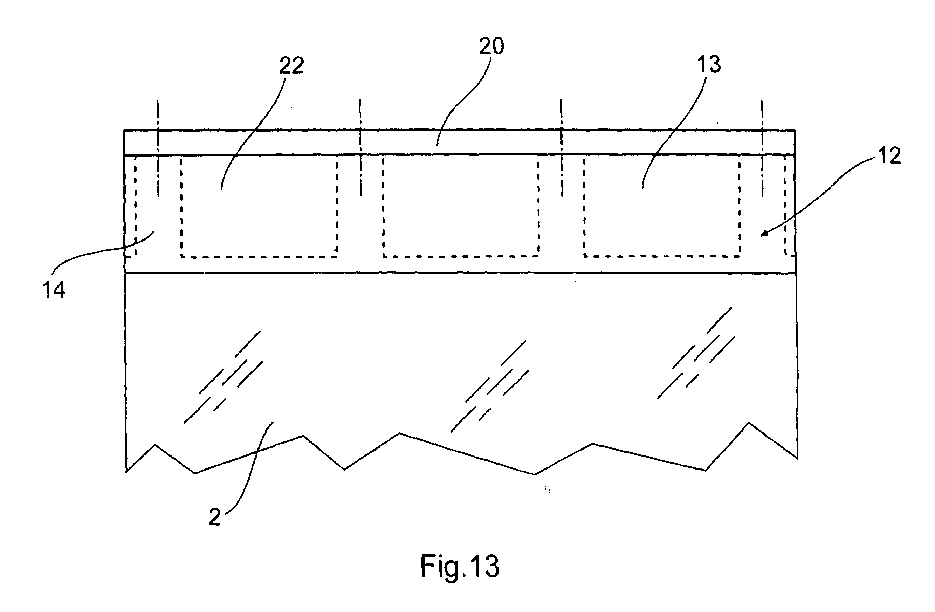

In Figur 8 ist ein gänzlich anderer Halter 14 gezeigt, bei dem der Sockel 15 aus Vereinfachungsgründen nicht dargestellt ist. Dieser Halter 14 ist in der Draufsicht H-förmig ausgebildet und die Taschen 18 sind nach oben offen. Somit ist es nicht erforderlich, beim Aufbau der Tragschiene 10 in der vorstehend erläuterten Art und Weise vorzugehen. Vielmehr können alle Halter 14 hintereinander in die Tragschiene 10 eingesetzt werden. Danach werden dann die Magnete 13 von oben in die Taschen 18 der Halter 14 eingeschoben und zum Schluss werden die nach oben offenen Taschen 18 mit einem Deckel 20 (siehe Figuren 12 und 13) verschlossen, der vorzugsweise mehrere Taschen 18 oder Einschübe 22 überdeckt.

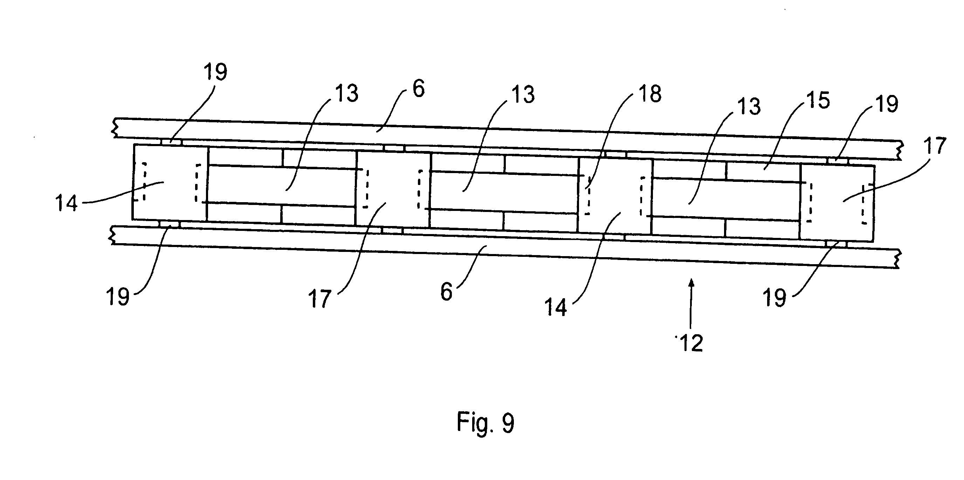

In Figur 9 ist eine Draufsicht auf das aus mehreren Haltern 14 und Magneten 13 bestehende Halteelement 12 gezeigt. Man erkennt, dass die Sockel 15 aneinander liegen, während die Aufnahmen 17 voneinander beabstandet sind. Dieser Abstand wird von den Magneten 13 überbrückt, die in den Taschen 18 der Aufnahmen 17 ruhen. Die seitlich an den Aufnahmen 17 angeordneten Leisten 19 liegen im Wesentlichen spielfrei an den Innenseiten der Gleitschienen 6 an und führen das Halteelement 12 in den Gleitschienen 6.

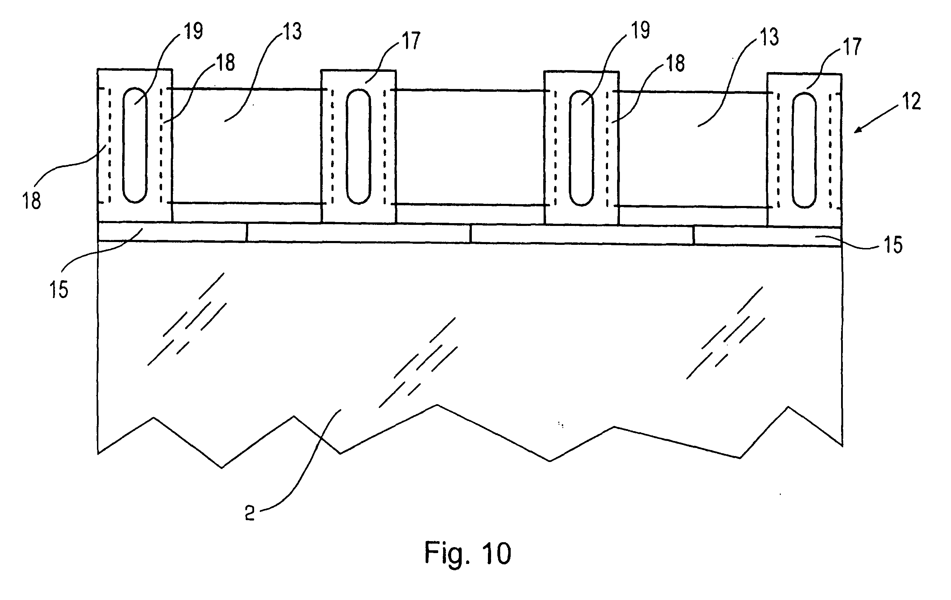

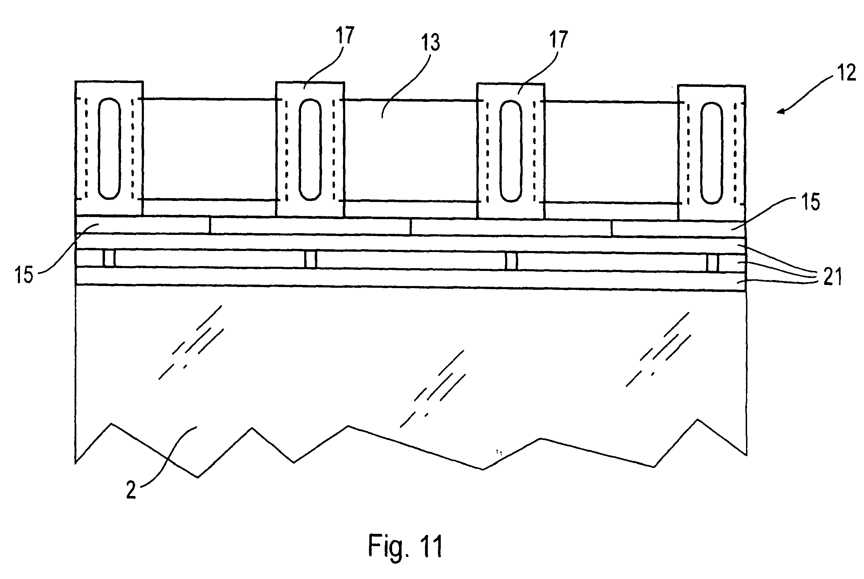

In Figur 10 ist eine Seitenansicht des aus mehreren Haltern 14 und Magneten 13 bestehenden Halteelementes 12 in Verbindung mit der Schiebetür 5 gezeigt. Das Halteelement 12 ist direkt mit der Schiebetür 5 verbunden. Wenn ein Höhenausgleich erforderlich ist, kann das Halteelement 12 auch unter Zwischenschaltung von Abstandsleisten 21 mit der Schiebetür 5 verbunden werden, wie in Figur 11 gezeigt ist.

In Figur 12 ist eine Seitenansicht auf das aus Haltern 14 gemäß Figur 8 bestehende Halteelement 12 in Verbindung mit der Schiebetür 5 gezeigt. Dabei sind die Magnete 13 von oben in die Taschen 18 eingeschoben und über den Deckel 20 gesichert. Der Deckel 20 ist über nicht näher dargestellte Verbindungselemente mit den Aufnahmen 17 verbunden.

In Figur 13 ist eine Seitenansicht einer weiteren Ausführungsform des Halteelementes 12 in Verbindung mit der Schiebetür 5 dargestellt. Das hier gezeigte Halteelement 12 besteht aus Haltern 14, von denen jeder mehrere nach oben offene Einschübe 22 aufweist, in welche die Magnete 13 eingesteckt werden können. Auch hier sind die Einschübe 22 mit einem Deckel 20 verschlossen. Ein weiterer Unterschied zu den in den Figuren 10 bis 12 gezeigten Haltern 14 besteht auch noch darin, dass bei den Haltern 14 nach den Figuren 10 bis 14 die Magnete 13 zur Seite hin, d. h. zu den Gleitschienen 6 hin, freiliegen, während die Magnete 13 beim Halter 14 nach Figur 13 auch zur Seite hin von dem Halter 14 bzw. den Seitenwänden der Einschübe 22 umschlossen sind.

In den Figuren 14 bis 17 sind die Einzelteile einer vorzugsweise als Exzenterverstellung ausgebildeten Justiereinrichtung 9 dargestellt, mit deren Hilfe die mit der Tragschiene 10 verbundene Schiebetür 5 ausgerichtet werden kann. Zu diesem Zweck sind in den jeweiligen Endabschnitten der Tragschiene 10 eine Reihe von quer zur Längserstreckung der Tragschiene 10 in horizontaler Richtung verlaufenden Durchgangsbohrungen 23 angeordnet.

Zu der Justiereinrichtung 9 gehört weiterhin ein Schuh 24, der zwei an die Seitenflächen der Tragschiene 10 zur Anlage kommende, vertikal ausgerichtete Laschen 25 und eine die beiden Laschen 25 an deren einem Ende verbindende, horizontal ausgerichtete Befestigungsplatte 26 aufweist. In den Laschen 25 sind eine der Anzahl der Durchgangsbohrungen 23 in der Tragschiene 10 entsprechende Anzahl von Justierschlitzen 27 vorgesehen. Da im dargestellten Ausführungsbeispiel drei Durchgangsbohrungen 23 vorgesehen sind, sind folglich in den Laschen 25 auch drei Justierschlitze 27 angeordnet. Dabei ist die Anordnung der Justierschlitze 27 so getroffen, dass die beiden äußeren Justierschlitze 27 als vertikal verlaufende Langlöcher ausgebildet sind, während der mittlere Justierschlitz 27 eine Ausgestaltung in Form eines liegenden T aufweist. In der Befestigungsplatte 26 ist ein sich in Richtung der Durchgangsbohrungen 23 erstreckendes Langloch 28 angeordnet, das zur Aufnahme eines nicht gezeigten Verbindungselementes zur Befestigung der Schiebetür 5 dient.

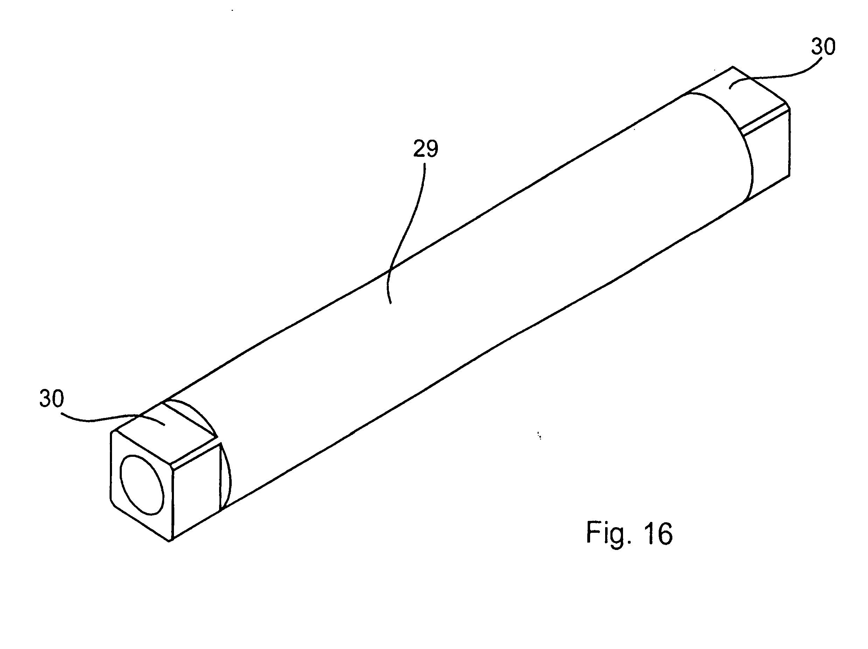

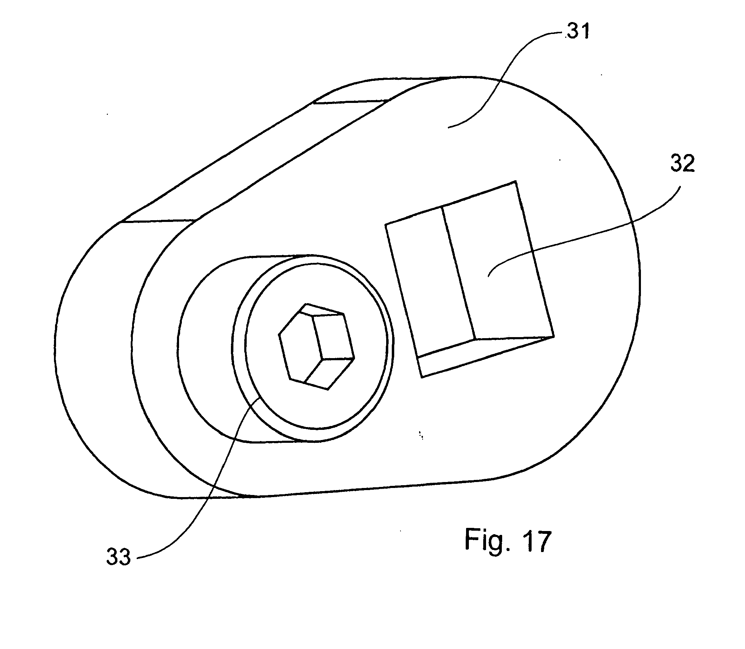

Zu der Justiereinrichtung 9 gehören weiterhin eine Welle 29, die in ihrem Mittelbereich einen kreisförmigen Querschnitt aufweist und an ihren beiden Enden als Vierkant 30 ausgebildet ist (vgl. Figur 16) sowie ein in Figur 17 gezeigter Schwenkarm 31. Der Schwenkarm 31 weist an seinem einen Ende eine Aufnahmeöffnung 32 für den Vierkant 30 der Welle 29 und an seinem anderen Ende einen Nocken 33 auf, der im vorliegenden Ausführungsbeispiel als Innensechskantschraube ausgebildet ist.

Die aus der Tragschiene 10, dem Schuh 24, der Welle 29 und dem Schwenkarm 31 bestehende und als Ganzes in Figur 2 gezeigte Justiereinrichtung 9 ist wie folgt aufgebaut:

Der Schuh 24 wird so auf die Tragschiene 10 aufgeschoben, dass die Durchgangsbohrungen 23 in der Tragschiene 10 mit den Justierschlitzen 27 fluchten. Dann wird die Welle 29 so durch den mittleren, als liegendes T ausgebildeten Justierschlitz 27 gesteckt, dass sie im Bereich eines vertikalen T-Astes liegt. Dabei ragen die an den beiden Enden der Welle 29 ausgebildeten Vierkante 30 über die Laschen 25 hinaus. Jetzt wird auf jeden Vierkant 30 je ein Schwenkarm 31 aufgesteckt und mit einer Halteschraube 34 so befestigt, dass der Nocken 33 nach einwärts zeigt und in den horizontalen Ast des liegenden T eingreift. Schließlich werden noch Sicherungsbolzen 35 eingesetzt, welche die beiden äußeren Justierschlitze 27 und die äußeren Durchgangsbohrungen 23 durchgreifen.

Durch eine Verdrehung der Welle 29 bzw. der an der Welle 29 befestigten Schwenkarme 31 kann nun die relative Lage des Schuhs 24 zur Tragschiene 10 verstellt werden, wodurch die Schiebetür 5 bezüglich ihrer Lage zum Führungsschlitten 4 justiert werden kann. Nach erfolgter Justage werden dann die Sicherungsbolzen 35 festgezogen, damit sich die einmal eingestellte Lage nicht mehr verändern kann.

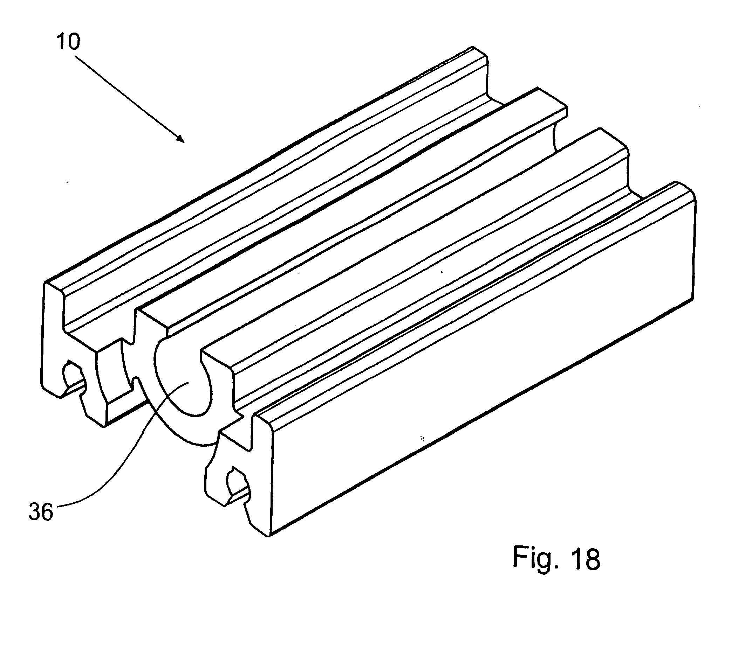

In der Figur 18 ist eine andere Ausführungsform der Tragschiene 10 dargestellt. Diese Tragschiene 10 weist eine mittig verlaufende, teilkreisförmige Längsnut 36 auf, in die der entsprechend ausgestaltete Sockel des Halters 14 eingeschoben werden kann.

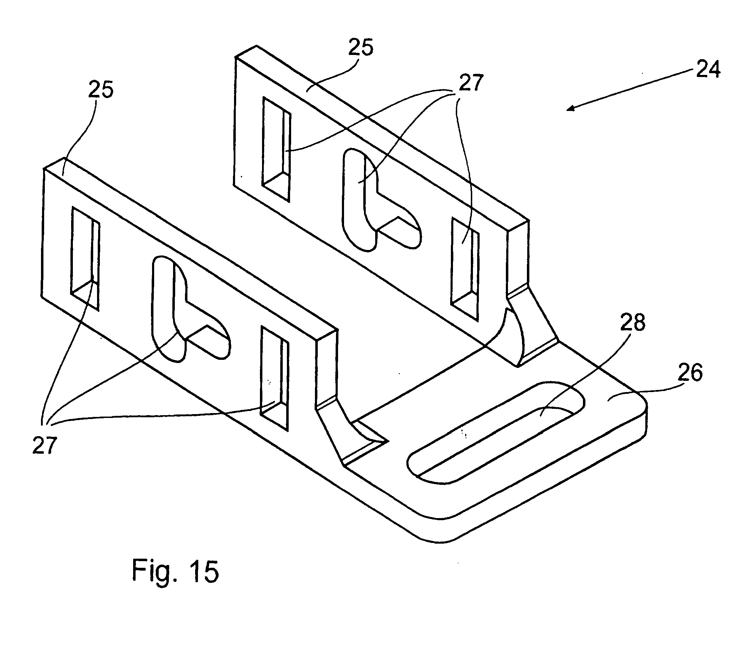

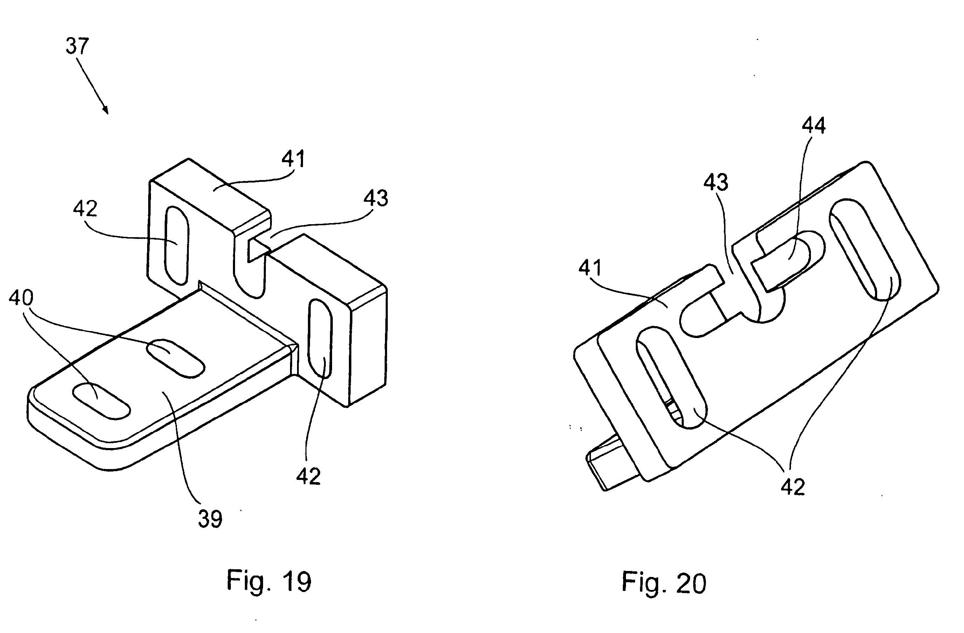

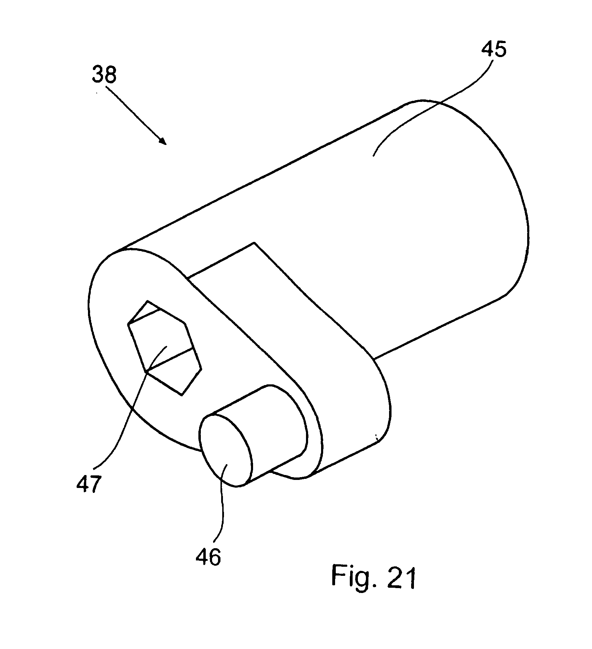

In den Figuren 19 bis 21 ist eine weitere Ausführungsform der ebenfalls vorzugsweise als Exzenterverstellung ausgebildeten Justiereinrichtung 9 dargestellt, die insbesondere mit der Tragschiene 10 nach Figur 18 verwendet werden kann. Diese Justiereinrichtung 9 ist nicht wie die Justiereinrichtung 9 nach den Figuren 15 bis 17 seitlich an der Tragschiene 10 angeordnet, sondern an der Stirnseite der Tragschiene 10. Die Justiereinrichtung 9 weist je einen an der Stirnseite der Tragschiene 10 anbringbaren L-förmigen Winkelträger 37 und eine zu jedem Winkelträger 37 gehörende Exzenterwelle 38 auf. Ein Schenkel 39 des Winkelträgers 37 weist zwei quer zu diesem Schenkel 39 verlaufende Langlöcher 40 auf, die zur Befestigung der an dem Winkelträger 37 anbringbaren Schiebetür 5 dienen. Ein anderer Schenkel 41 des Winkelträgers 37, der breiter ist als der Schenkel 39 und seitlich über diesen übersteht, weist im überstehenden Bereich ebenfalls zwei quer zu diesem Schenkel 41 verlaufende Langlöcher 42 auf, die zur Verbindung mit der Stirnseite der Tragschiene 10 dienen. Außerdem ist mittig zwischen den beiden Langlöchern 42 ein nach einer Seite hin offener Schlitz 43 vorgesehen, der sich in der gleichen Richtung erstreckt wie die Langlöcher 42. Auf der von dem Schenkel 39 abgewandten Seite ist in dem Schenkel 41 eine quer zum Schlitz 43 und zu den Langlöchern 42 verlaufende Aufnahmenut 44 angeordnet, welche den Schlitz 43 schneidet.

Die weiterhin zur Justiereinrichtung 9 gehörende Exzenterwelle 38 besteht aus einem Wellenstummel 45, an dessen einem Ende mittels eines Exzenterarmes ein nach außen vorstehender Nocken 46 angeordnet ist. In der Achse des Wellenstummels 45 ist eine Eingriffsöffnung 47 vorgesehen, die im dargestellten Ausführungsbeispiel als Innensechskant ausgebildet ist und dazu dient, mittels eines entsprechenden Werkzeuges, die Exzenterwelle 38 zu verstellen.

Die Justiereinrichtung 9 nach den Figuren 18 bis 21 wird wie folgt verwendet:

Der Wellenstummel 45 der Exzenterwelle 38 wird in die Längsnut 36 der Tragschiene 10 eingesteckt. Dann wird der Winkelträger 37 mit seinem Schenkel 41 so an die Tragschiene 10 angesetzt, dass der Nocken 46 in die Aufnahmenut 44 eingreifen kann. In dieser Stellung ist die Eingriffsöffnung 47 durch den Schlitz 43 erreichbar. Um die Tragschiene 10 bezüglich der Schiebetür 5 zu justieren, wird die Exzenterwelle 38 mittels eines Werkzeuges oder dergleichen verdreht. Dabei dreht sich der Wellenstummel 45 in der Längsnut 36 und der Nocken 46 gleitet in die Aufnahmenut 44. Nach erfolgter Justage werden dann noch nicht gezeigte und in den Langlöchern 42 angeordnete Befestigungsbolzen festgezogen und die einmal eingestellte Lage bleibt dauerhaft erhalten.

In Figur 22 sind die in Verbindung mit dem erfindungsgemäßen Linearantrieb 1 verwendeten Spulen 7 dargestellt. Die Spulen 7 sind in Spulenhaltern 48 gehalten. Die Spulenhalter 48 sind mit einer Basisplatte 49 versehen, mit denen sie in die C-förmigen Gleitschienen 6 eingeschoben werden können (vgl. Figur 1). Zwischen den Spulenhaltern 48 bzw. den Spulen 7 sind Abstandhalter 50 vorgesehen, die ebenfalls eine in die C-förmigen Gleitschienen 6 einsetzbare Grundplatte 51 aufweisen. Die Abstandhalter 50 sind unterschiedlich lang ausgebildet, um die Abstände der Spulen 7 untereinander variieren zu können. Die Spulen 7 bzw. ihre Spulenhalter 48 können natürlich auch ohne zwischengeschaltete Abstandhalter 50 direkt aneinander anliegen. Außerdem sind an den Spulen 7 Anschlussfahnen 52 zur elektrischen Verbindung der Spulen 7 vorgesehen.

Die Spulen 7 können entweder in unterschiedlichen Stellungen in die Spulenhalter 48 einsetzbar sein oder nach einer alternativen Ausführung auch um ihre Achse drehbar in den Spulenhaltern 48 aufgenommen sein, damit die Anschlussfahnen 52 je nach Stellung der Spule 7 in verschiedene Richtungen weisen. Bei dem in Figur 22 gezeigten Beispiel weisen die Anschlussfahnen 52 der einen Spule 7 zur Seite, während die Anschlussfahnen 52 der anderen Spule nach oben zeigen. Infolge dieser Anordnung mit vorzugsweise um 90° alternierend angeordneten Anschlussfahnen 52 ist es möglich, die Spulen 7 je nach Stellung ihrer Anschlussfahnen 52 beim Aufschieben der Kontaktschiene 8 unterschiedlich zu polarisieren. Damit es beim Aufschieben der Kontaktschiene 8 nicht zu Störungen kommen kann, weisen die Enden aller Anschlussfahnen 52 in die gleiche Richtung.

In Figur 23 ist der erfindungsgemäße Linearantrieb 1 im zusammengebauten Zustand dargestellt, lediglich die an den Schuhen 24 angebrachte Schiebetür 5 ist zur besseren Übersichtlichkeit weggelassen. Man erkennt, dass das aus einzelnen Haltern 14 und Magneten 13 bestehende Halteelement 12 nahezu spielfrei zwischen den beiden C-förmigen Gleitschienen 6 angeordnet ist. In die Gleitschienen 6 sind auf deren Außenseite eine Reihe von Spulen 7 eingeschoben, die je nach Stellung ihrer Anschlussfahnen 52 mit den oberen oder mit den seitlichen in der Kontaktschiene 8 angeordneten Kontaktleitern verbunden sind. Die Schiebetür 5 wird allein über die von den Spulen 7 und den Magneten 13 erzeugte Kraft gehalten und je nach erzeugtem Magnetfeld vorwärts bzw. rückwärts bewegt.

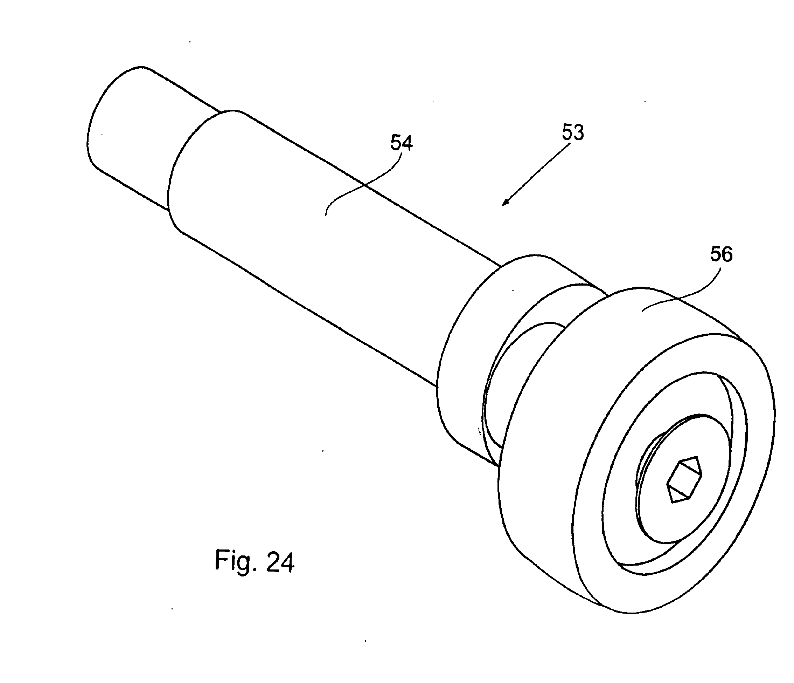

In der Figur 23 ist weiterhin erkennbar, dass an dem Führungsschlitten 4 im vorderen und im hinteren Bereich jeweils eine Stützrolle 53 angeordnet ist, die im Detail in Figur 24 dargestellt ist. Diese Stützrollen 53 stabilisieren die Schiebetür 5 beim Anfahren und Bremsen und verhindern so eine Schaukelbewegung der Schiebetür 5. Die Stützrollen 53 bestehen aus einer Lagerwelle 54, welche die Tragschiene 10 in einer Bohrung 55 (vgl. Figur 14) durchsetzt. An einem Ende der Lagerwelle 54 ist exzentrisch zur Wellenachse eine frei drehbare Rolle 56 angeordnet, die auf einer Führungsbahn 57 der Halterung 2 läuft (vgl. Figur 23). An dem anderen Ende der Lagerwelle 54 ist ein nicht dargestelltes Gewinde angeordnet, das zur Aufnahme einer Befestigungsschraube dient. Die Rolle 56 ist vorzugsweise lösbar an der Lagerwelle 54 angeordnet, um im Bedarfsfall eine leichte Auswechselung der Rolle 56 vornehmen zu können. Die Stützrollen 53 sind so angeordnet, dass beide Rollen 56 auf der gleichen Seite der Tragschiene 10 liegen. Infolge der exzentrischen Lagerung der Rolle 56 zur

Wellenachse kann durch Drehung der Lagerwelle 54 die Rolle 56 in ihrer Lage verstellt und so exakt zu der Führungsbahn 57 ausgerichtet werden.

Es ist nicht erforderlich, dass die Stützrollen 54 während des gesamten Bewegungsvorganges der Schiebetür 4 auf der Führungsbahn 57 abrollen. Vielmehr können die Rollen 56 auch einen geringen Abstand von z. B. wenigen zehntel Millimetern von der Führungsbahn 57 aufweisen, der beim Anfahren und Abbremsen durch die Schaukelbewegung der Schiebetür 4 unterbrochen wird. Je nach gewähltem Abstand kann bereits eine kaum wahrnehmbare Schaukelbewegung ausreichen, um den Abstand zu überwinden. Somit würden die Rollen 56 nur in der Beschleunigungs- bzw. Abbremsphase auf der Führungsbahn 57 abrollen, während sie während der normalen Bewegung der Schiebetür 4 einen Abstand zu der Führungsbahn 57 aufweisen und somit auch keine zusätzliche Reibung verursachen.

### Bezugszeichenliste

- 1: Linearantrieb
- 2: Halterung
- 3: Führungsschiene
- 4: Führungsschlitten
- 5: Schiebetür
- 6: Gleitschiene
- 7: Spule
- 8: Kontaktschiene
- 9: Justiereinrichtung
- 10: Tragschiene
- 11: Nut
- 12: Halteelement
- 13: Magnet
- 14: Halter
- 15: Sockel
- 16: Verbindungselement
- 17: Aufnahme
- 18: Tasche
- 19: Leiste
- 20: Deckel
- 21: Abstandsleiste
- 22: Einschub
- 23: Durchgangsbohrung
- 24: Schuh
- 25: Lasche
- 26: Befestigungsplatte
- 27: Justierschlitz
- 28: Langloch
- 29: Welle
- 30: Vierkant
- 31: Schwenkarm
- 32: Aufnahmeöffnung
- 33: Nocken
- 34: Halteschraube
- 35: Sicherungsbolzen
- 36: Längsnut
- 37: Winkelträger
- 38: Exzenterwelle
- 39: Schenkel
- 40: Langloch
- 41: Schenkel
- 42: Langloch
- 43: Schlitz
- 44: Aufnahmenut
- 45: Wellenstummel
- 46: Nocken
- 47: Eingriffsöffnung
- 48: Spulenhalter
- 49: Basisplatte
- 50: Abstandhalter
- 51: Grundplatte
- 52: Anschlussfahne
- 53: Stützrolle
- 54: Lagerwelle
- 55: Bohrung
- 56: Rolle
- 57: Führungsbahn

## Patentansprüche

1. Schiebetür mit
• einem Antrieb und
• einem die Schiebetür tragenden Tragsystem, bei der der Antrieb als Linearantrieb (1) ausgebildet und das Tragsystem für die Schiebetür (5) in den Linearantrieb (1) integriert ist, wobei
- der Linearantrieb (1) eine Vielzahl von Magneten (13) aufweist und
- die Magnete (13) sowohl zum Tragen der Schiebetür (5) als auch zum Verfahren der Schiebetür (5) dienen, wobei
· die Magnete (13) über ein Halteelement (12) an der Schiebetür (5) befestigt sind und
· das Halteelement (12) in eine mit der Schiebetür (5) verbindbare Tragschiene (10) eingesetzt bzw. eingeschoben ist,
**dadurch gekennzeichnet, dass**
• die Tragschiene (10) zur Aufnahme des Halteelementes (12) an ihrer Oberseite mit einer Nut (11, 36) versehen ist,
• das Halteelement (12) aus einer Vielzahl von einzelnen Haltern (14) besteht und
• jeder Halter (14) aus einem in die Nut (11, 36) einsetzbaren Sockel (15) und einer Aufnahme (17) für die Magnete (13) besteht.

2. Schiebetür nach Anspruch 1, **dadurch gekennzeichnet, dass** die Nut (11, 36) des Halteelements (13) C-förmig ausgebildet ist.

3. Schiebetür nach Anspruch 1 oder 2, **dadurch gekennzeichnet, dass** der Sockel (15) des jeweiligen Halters (14) länger und breiter ist als seine Aufnahme (17).

4. Schiebetür nach einem der vorhergehenden Ansprüche, **dadurch gekennzeichnet, dass** der Sockel (15) des jeweiligen Halters (14) an seinen beiden Enden mit komplementär ausgebildeten Verbindungselementen (16) versehen ist.

5. Schiebetür nach einem der vorhergehenden Ansprüche, **dadurch gekennzeichnet, dass** die Aufnahme (17) des jeweiligen Halters (14) Taschen (18) zur Aufnahme der Magnete (13) aufweist.

6. Schiebetür nach Anspruch 5, **dadurch gekennzeichnet, dass** die Taschen (18) in Richtung der Verbindungselemente (16) weisen.

7. Schiebetür nach Anspruch 5 oder 6, **dadurch gekennzeichnet, dass** die Taschen (18) nach oben offen sind.

8. Schiebetür nach einem der vorhergehenden Ansprüche, **dadurch gekennzeichnet, dass** auf den Außenseiten der Aufnahme (17) vorzugsweise vertikal verlaufende Leisten (19) zur Führung an oder in einer Führungsschiene (3) vorgesehen sind.

9. Schiebetür nach Anspruch 8, **dadurch gekennzeichnet, dass** die Führungsschiene (3) durch zwei voneinander beabstandete Gleitschienen (6) gebildet ist.

10. Schiebetür nach Anspruch 8 oder 9, **dadurch gekennzeichnet, dass** der Spalt zwischen den Leisten (19) und der Führungsschiene (3) etwa 0,1 mm beträgt.

11. Schiebetür nach einem der vorhergehenden Ansprüche, **dadurch gekennzeichnet, dass** der Halter (14) in der Draufsicht H-förmig ausgebildet ist.

12. Schiebetür nach einem der vorhergehenden Ansprüche, **dadurch gekennzeichnet, dass** die Halter (14) über Abstandsleisten (21) mit der Schiebetür (5) verbunden sind.

13. Schiebetür nach einem der vorhergehenden Ansprüche, **dadurch gekennzeichnet, dass** pro Halter (14) mehrere nach oben offene Einschübe (22) zur Aufnahme der Magnete (13) vorgesehen sind.

14. Schiebetür nach einem der vorhergehenden Ansprüche sowie nach Anspruch 5 und/oder 13, **dadurch gekennzeichnet, dass** die nach oben offenen Taschen (18) und/oder die Einschübe (22) mittels eines Deckels (20) verschlossen sind.

15. Schiebetür nach Anspruch 14, **dadurch gekennzeichnet, dass** der Deckel (20) mehrere Taschen (18) oder Einschübe (22) überdeckt.

## Claims

1. A sliding door having
• a drive and
• a carrying system carrying the sliding door, in which the drive is formed as a linear drive (1) and the carrying system for the sliding door (5) is integral with the linear drive (1), wherein
- the linear drive (1) has a plurality of magnets (13), and
- the magnets (13) serve for both carrying the sliding door (5) and for displacing the sliding door (5), wherein
○ the magnets (13) are attached at the sliding door (5) via a holding element (12), and
○ the holding element (12) is inserted, respectively introduced into a carrying rail (10) that is connectable to the sliding door (5),
**characterized in that**
• the carrying rail (10), at the upper side thereof, is provided with a groove (11, 36) for the reception of the holding element (12),
• the holding element (12) consists of a plurality of individual holders (14), and
• each holder (14) consists of a base (15), which is insertable into the groove (11, 36), and of a reception (17) for the magnets (13).

2. A sliding door according to claim 1, **characterized in that** the groove (11, 36) of the holding element (12) is formed in a C-shape.

3. A sliding door according to claim 1 or 2, **characterized in that** the base (15) of the respective holder (14) is longer and wider than its reception (17).

4. A sliding door according to one of the preceding claims, **characterized in that** the base (15) of the respective holder (14) is provided with complementary formed connecting elements (16) at both its ends.

5. A sliding door according to one of the preceding claims, **characterized in that** the reception (17) of the respective holder (14) has pockets (18) for the reception of the magnets (13).

6. A sliding door according to claim 5, **characterized in that** the pockets (18) are pointing into the direction of the connecting elements (16).

7. A sliding door according to claim 5 or 6, **characterized in that** the pockets (18) are open to the top side.

8. A sliding door according to one of the preceding claims, **characterized in that** preferably vertically extending strips (19) are provided for guidance at or in a guiding rail (3) at the exterior sides of the reception (17).

9. A sliding door according to claim 8, **characterized in that** the guiding rail (3) is formed by two sliding rails (6) which are spaced apart from each other.

10. A sliding door according to claim 8 or 9, **characterized in that** the gap between the strips (19) and the guiding rail (3) amounts to approximately 0.1 mm.

11. A sliding door according to one of the preceding claims, **characterized in that,** in the top view, the holder (14) is formed in an H-shape.

12. A sliding door according to one of the preceding claims, **characterized in that** the holders (14) are connected to the sliding door (5) via spacer strips (21).

13. A sliding door according to one of the preceding claims, **characterized in that** several slide-in units (22), which are open to the top side, are provided per holder (14) for the reception of the magnets (13).

14. A sliding door according to one of the preceding claims, as well as according to claim 5 and/or 13, **characterized in that** the pockets (18) and/or slide-in units (22), which are open to the top side, are closed by means of a cover (20).

15. A sliding door according to claim 14, **characterized in that** the cover (20) covers several pockets (18) or slide-in units (22).

## Revendications

1. Porte coulissante, comprenant
- un entraînement, et
- un système porteur, portant la porte coulissante, dans laquelle l'entraînement est aménagé comme entraînement linéaire (1) et le système porteur pour la porte coulissante (5) est intégré dans l'entraînement linéaire (1),
- l'entraînement linéaire (1) présentant une pluralité d'aimants (13), et
- les aimants (13) servant non seulement à supporter la porte coulissante (5) mais aussi à déplacer la porte coulissante (5),
• les aimants (13) étant fixés à la porte coulissante (5) par l'intermédiaire d'un élément de retenue (12), et
• l'élément de retenue (12) étant inséré, respectivement introduit dans un rail porteur (10) qui est connectable à la porte coulissante (5),
**caractérisée en ce que**
- le rail porteur (10), sur sa face supérieure, est pourvu d'une rainure (11, 36) pour la réception de l'élément de retenue (12),
- l'élément de retenue (12) est composé d'une pluralité de supports (14) individuels, et
- chaque support (14) consiste en un socle (15), qui peut être inséré dans la rainure (11, 36), et en une réception (17) pour les aimants (13).

2. Porte coulissante selon la revendication 1, **caractérisée en ce que** la rainure (11, 36) de l'élément de retenue (12) est aménagée en forme de C.

3. Porte coulissante selon la revendication 1 ou 2, **caractérisée en ce que** le socle (15) du support (14) respectif est plus long et plus large que sa réception (17).

4. Porte coulissante selon l'une des revendications précédentes, **caractérisée en ce que**, sur ses deux extrémités, le socle (15) du support (14) respectif est pourvu d'éléments de connexion (16) aménagés d'une forme complémentaire.

5. Porte coulissante selon l'une des revendications précédentes, **caractérisée en ce que** la réception (17) du support (14) respectif présente des pochettes (18) pour la réception des aimants (13).

6. Porte coulissante selon la revendication 5, **caractérisée en ce que** les pochettes (18) pointent vers la direction des éléments de connexion (16).

7. Porte coulissante selon la revendication 5 ou 6, **caractérisée en ce que** les pochettes (18) sont ouvertes vers le haut.

8. Porte coulissante selon l'une des revendications précédentes, **caractérisée en ce que** des bandelettes (19), s'étendant de préférence verticalement sur les faces extérieures de la réception (17), sont prévues pour le guidage sur ou dans un rail de guidage (3).

9. Porte coulissante selon la revendication 8, **caractérisée en ce que** le rail de guidage (3) est aménagé par l'intermédiaire de deux glissières (6) qui sont espacées l'une de l'autre.

10. Porte coulissante selon la revendication 8 ou 9, **caractérisée en ce que** l'interstice entre les bandelettes (19) et le rail de guidage (3) s'élève à environ 0,1 mm.

11. Porte coulissante selon l'une des revendications précédentes, **caractérisée en ce que** le support (14) est aménagé en forme de H dans la vue par dessus.

12. Porte coulissante selon l'une des revendications précédentes, **caractérisée en ce que** les supports (14) sont connectés à la porte coulissante (5) par l'intermédiaire de bandelettes d'écartement (21).

13. Porte coulissante selon l'une des revendications précédentes, **caractérisée en ce que** plusieurs inserts (22), qui sont ouverts vers le haut, sont prévus pour chaque support (14) pour la réception des aimants (13).

14. Porte coulissante selon l'une des revendications précédentes, de même selon la revendication 5 et/ou 13, **caractérisée en ce que** les pochettes (18) et/ou les inserts (22), qui sont ouverts vers le haut, sont fermés par l'intermédiaire d'un couvercle (20).

15. Porte coulissante selon la revendication 14, **caractérisée en ce que** le couvercle (20) couvre plusieurs pochettes (18) ou inserts (22).
